(19) Europäisches Patentamt

European Patent Office

Office européen des brevets

(11) EP 0 621 734 B1

(12) EUROPEAN PATENT SPECIFICATION

(45) Date of publication and mention
of the grant of the patent:
**30.05.2001 Bulletin 2001/22**

(51) Int Cl.⁷: **H04Q 1/30**, H04Q 3/00,
H04M 3/22, H04L 12/26,
H04M 3/36

(21) Application number: **94302714.4**

(22) Date of filing: **15.04.1994**

(54) **Method and apparatus for monitoring telecommunication networks**

Verfahren und Gerät zur Überwachung von Telekommunikationsnetzwerken

Procédé et dispositif pour la surveillance de réseaux de télécommunication

(84) Designated Contracting States:
**CH DE DK FR GB IT LI SE**

(30) Priority: **19.04.1993 GB 9308026**

(43) Date of publication of application:
**26.10.1994 Bulletin 1994/43**

(73) Proprietor: **Agilent Technologies, Inc.**
**Palo Alto, CA 94303 (US)**

(72) Inventor: **Clarke, David**
**Bristol BS17 5SP (GB)**

(74) Representative: **Coker, David Graeme et al**
**Agilent Technologies UK Ltd,**
**Legal Department, M/S CSCA15,**
**Eskdale Road**
**Winnersh Triangle**
**Wokingham, Berks RG41 5DZ (GB)**

(56) References cited:
- **CCITT-SPECIFICATIONS OF SIGNALLING SYSTEM NO 7- BLUE BOOK, vol.VI, 1988, GENEVA (CH) pages 465 - 484 'Fascicle VI.9 - Recommendations Q.791'**
- **IEEE GLOBAL TELECOMMUNICATIONS CONFERENCE & EXHIBITION, vol.3, 27 November 1989, DALLAS (US) pages 1144 - 1148, XP144911 KIM ET AL 'Signaling Network Operations System (SIGNOS) in Korea'**

- **PROCEEDINGS OF THE IEEE, vol.80, no.4, April 1992, NEWYORK (US) pages 607 - 617, XP304351 JABBARI 'Routing and Congestion Control in Common Channel Signaling System No.7'**
- **PROCEEDINGS OF THE THIRTEENTH TELETRAFFIC CONGRESS, 19 June 1991, COPENHAGEN (DK) pages 413 - 419, XP303061 ZEPF ET AL 'Transient Analysis of Congestion and Flow Control Mechanisms in Common Channel Signalling Networks'**
- **PROCEEDINGS OF THE THIRTEENTH INTERNATIONAL CONGRESS, 19 June 1991, COPENHAGEN (DK) pages 73 - 78, XP303011 KLEIN ET AL 'Performance Analysis of a large-scale Common Channel Signalling Network'**
- **IEEE COMMUNICATIONS MAGAZINE, vol.28, no.7, July 1990, NEWYORK (US) pages 44 - 56, XP140257 WILLMANN ET AL 'Performance Modeling of Signaling System No. 7'**
- **IEEE GLOBAL TELECOMMUNICATIONS CONFERENCE & EXHIBITION, vol.1, 27 November 1989, DALLAS (US) pages 180 - 184, XP145743 LIM 'Minimum-cost Dimensioning model for Common Channel Signaling Networks under joint performance and reliability constraints'**
- **IEEE COMMUNICATIONS MAGAZINE, vol.28, no.7, July 1990, NEWYORK (US) pages 19 - 35, XP140255 MODARRESSI ET AL 'Signaling System N0. 7: A Tutorial'**

## Description

Technical Field

This invention relates to methods and apparatus for monitoring networks, in particular communications signalling networks.

Background Art

In modern communications technology it has become common practice to provide two related but separate network infrastructures: a transmission network for carrying end-user data traffic, and a signalling network for controlling operation of the transmission network in accordance with control signals transferred through the signalling network. In practice such signalling networks comprise high-speed computers interconnected by signalling links; computer programs control the computers to provide a set of operational and signalling functions in accordance with a standardized protocol. One example of such a signalling protocol is the Signalling System No. 7 (SS7) which is being extensively deployed for control of telephone and other data transmission networks. An SS7 network basically comprises various types of signalling points, such as signalling switching points (SSPs), which include signalling end points (SEPs) associated for example with respective end stations in the transmission network, and service control points (SCPs), all interconnected via signalling links by signalling transfer points (STPs).

The large size and complexity of data transmission networks entails a correspondingly large and complex signalling network, controlled by very sophisticated computer programs. The complexity of signalling networks is increased by the need to provide redundancy to ensure that failure of a single component of the network does not cause failure of the entire network, and thus of the associated transmission network. Thus, for example, it is common in an SS7 network to provide each SSP or SCP with at least two signalling links connected to respective ones of a pair of geographically-separated STPs.

It has been found that, despite or because of this complexity, in certain circumstances changes and/or failures of components in a signalling network can cause serious malfunctions of the signalling network, and in extreme cases can result in complete failure of the signalling network and its associated transmission network. The complexity and speed of operation of the signalling network can make detection and cure of the fault very difficult.

It is an object of this invention to provide a method and apparatus for at least ameliorating this problem.

The paper "Minimum-cost dimensioning model for common channel signaling networks under joint performance and reliability constraints" by Y. Lim, IEEE Global Telecommunications Conf. & Exhibition, Dallas, Nov 1989, vol. 1, pp. 180-184, describes a method, based on specified assumptions, of modelling operation of a signalling network.

Disclosure of Invention

According to one aspect of this invention there is provided a method of monitoring a signalling network having a plurality of signalling points (e.g. SEPs or other kinds of SSP, and/or SCPs) coupled by respective first signalling links to a first signalling point (e.g. one member of an STP pair) and by respective second signalling links to a second signalling point (e.g. the other member of the STP pair), characterised by:

> monitoring the number of messages transferred over each of said signalling links;
> deriving a measurement of the total number of messages processed by each of said first and second signalling points; and
> deriving a measurement of the total number of messages processed by at least one of said first and second signalling points relative to the sum total of messages processed by said first and second signalling points.

We have found that this measurement of the total number of messages processed by at least one of said first and second signalling points relative to the sum total of messages processed by said first and second signalling points, referred to herein as the STP Pair load balance, provides a convenient and effective indication of certain kinds of potential problems affecting proper operation of the signalling network.

According to another aspect of this invention there is provided apparatus for monitoring a signalling network having a plurality of signalling points coupled by respective first signalling links to a first signalling point and by respective second signalling links to a second signalling point, characterised by:

> means for monitoring the number of messages transferred over each of said signalling links;
> means for deriving a measurement of the total number of messages processed by each of said first and second signalling points; and

means for deriving a measurement of the total number of messages processed by at least one of said first and second signalling points relative to the sum total of messages processed by said first and second signalling points.

Brief Description of Drawings

A method and apparatus in accordance with this invention for monitoring a signalling network will now be described, by way of example, with reference to the accompanying drawings, in which:

Figure 1       is a schematic diagram of part of an SS7 signalling network;
Figure 2       is a flow diagram of a procedure used in deriving measurements of the operation of the network; and
Figure 3       is an illustration of a spider diagram containing measurements of the operation of the network.

Best Mode for Carrying Out the Invention, & Industrial Applicability

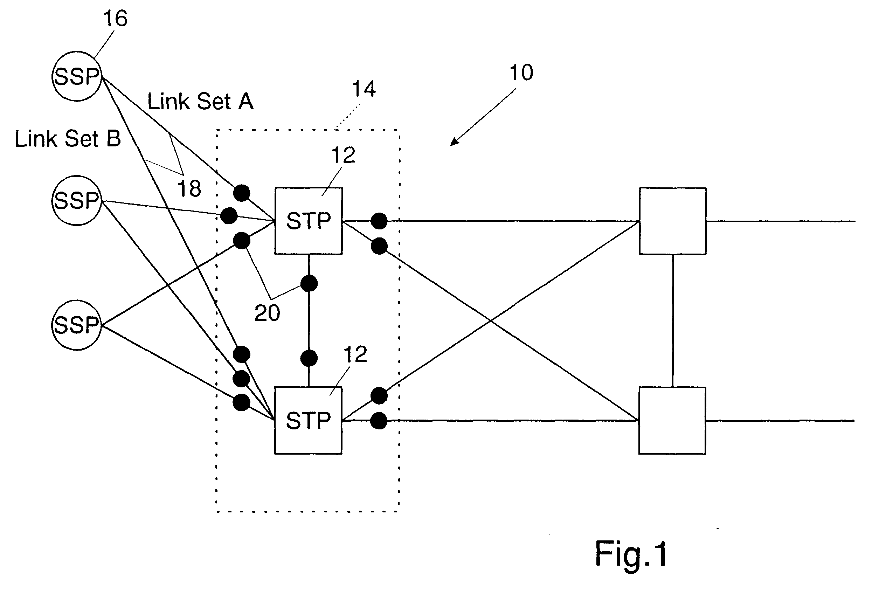

Referring to Figure 1, an SS7 network 10 typically includes signalling transfer points (STPs) 12 arranged in pairs as at 14. STPs operate to transfer signalling messages, for controlling switching of an associated transmission network (not shown), between signalling switching points (SSPs) 16 and other parts of the signalling network 10. The SSPs 16 are coupled to the STPs 12 by signalling link sets 18 each comprising a plurality of individual signalling links. The number of signalling links in a link set is chosen to provide appropriate capacity for the level of signalling traffic expected between the associated SSP and STP. The STPs are in turn coupled to each other and to other parts of the signalling network 10 by further signalling links.
It should be noted that an SS7 network belonging to an individual transmission network operator will typically comprise many STP pairs and associated SSPs and/or SCPs. However, because the present invention may be implemented identically for each STP pair, for the sake of clarity Figure 1 shows only one such pair.
To provide redundancy each SSP 16 is coupled by respective link sets A and B to at least two STPs (i.e. the members of an STP pair), which are geographically separated. If all parts of the network are operating normally, the overall signalling traffic handled by an STP pair should ideally be evenly distributed between the members of the pair. Likewise, the signalling traffic from any one SSP should be evenly distributed between the two link sets coupling that SSP to each member of its associated STP pair, and the signalling traffic over each link set should be evenly distributed between the links making up that link set.
Probes 20 (e.g. Hewlett-Packard Signaling Test Set 37900D) are connected to monitor the signalling traffic on every link in each link set coupled to an STP. These probes may use any convenient method to accumulate data on the link traffic; thus, for example, the technique based on random sampling of messages as described in European patent application No. 0 477 448 may be used. The data obtained may include, for example, counts of various different categories of messages (as indicated by indentification bits in the message headers) transferred over the signalling links, and counts of the bytes (octets) which constitute those messages. The different message categories may include system management messages, system maintenance messages, messages associated with telephone calls, and messages associated with ISDN (integrated services digital network) communications.
The probes 20 are arranged to aggregate together the link traffic data thus obtained to enable convenient derivation of the measurements described below. For example, the individual probes may be connected via RS-232 links to respective control and communications devices, in turn interconnected by a wide-area network (WAN, not shown) to transmit the collected data to appropriate equipment at a single site for analysis.
The link traffic data are used to derive the following measurements:

STP Pair load balance

The total loads of messages processed by the two STPs in a pair (STPLoad1 and STPLoad2) are derived from counts of message bytes monitored by the probes 20; the STP Pair load balance is then obtained from the expression

$$\max(STPLoad1/(STPLoad1+STPLoad2),STPLoad2/(STPLoad1+STPLoad2))$$

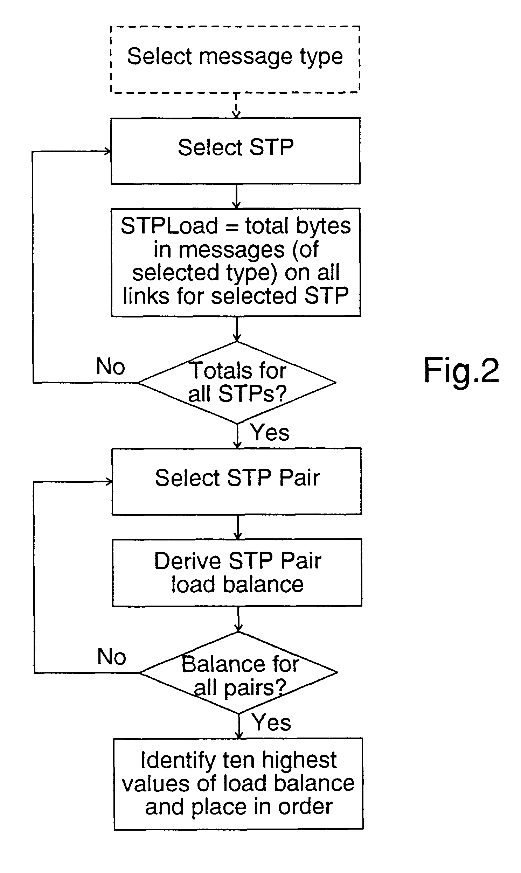

where the expression max(m,n) indicates selection of whichever of the values m and n is the greater. It can be seen that the load balance is expressed relative to the sum total of messages processed by both STPs in the pair; thus the load balance is 0.5 when the loads on the two STPs are balanced, and tends towards zero or unity as an STP carries less or more than a balanced share of the total load. The calculation is repeated for each STP pair, and the pairs (in this example ten) with the highest values (i.e. largest load imbalances) are identified. Figure 2 shows a procedure by which the individual STPLoad values, and the STP Pair load balance values, can be obtained. These values may be derived in relation to messages of all types processed by the STPs, or, as indicated by the dashed line box in Figure 2, in relation to messages of a particular type.

SSP Connection balance

The total loads of messages transferred over each of the link sets A and B (LoadA and LoadB) for an SSP are derived from counts of message bytes monitored by the probes 20; the SSP Connection balance is then obtained from the expression

$$max(LoadA/(LoadA + LoadB),LoadB/(LoadA + LoadB))$$

This calculation is repeated for each SSP, and the ten SSPs with the highest values (i.e. largest connection imbalances) are identified. A procedure similar to that in Figure 2 may be used, with link sets A and B, and link set loads, substituted for STP Pairs and STP loads respectively.

Link load balance

The total loads of messages transferred over each of the links in a link set (LinkLoad1,LinkLoad2,...,LinkLoadX, where X is the number of links in the set) are derived from counts of message bytes monitored by the probes 20; the Link load balance is then obtained from the expression

$$max(LinkLoad1/(LinkLoad1+LinkLoad2+..+LinkLoadX),LinkLoad2/(LinkLoad1+$$

$$LinkLoad2+..+LinkLoadX),..,LinkLoadX/(LinkLoad1+LinkLoad2+..+LinkLoadX))$$

This calculation is repeated for each link set, and the ten link sets with the highest values (i.e. largest imbalances between the constituent links) are identified. A procedure similar to that in Figure 2 may be used, with the links in a link set, and the link loads, substituted for STP Pairs and STP loads respectively. In this case the link load balance will have a value of 1/X when the message load is balanced across all links in a link set.

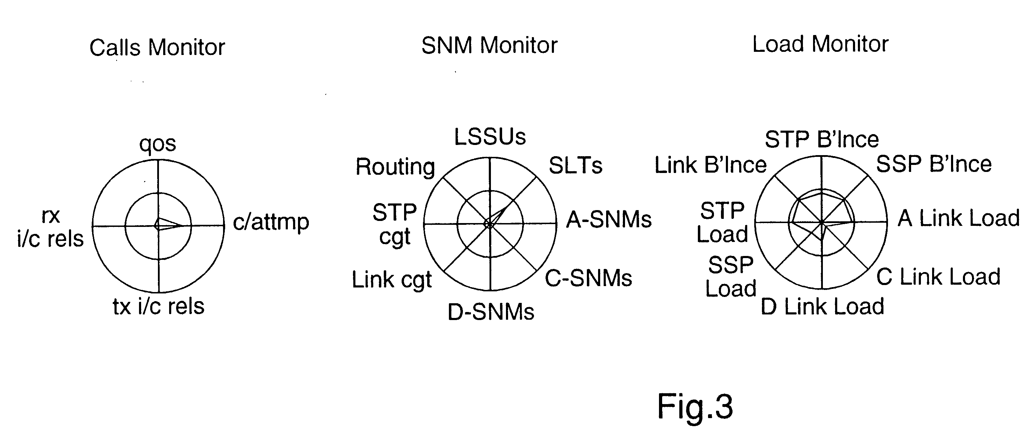

The values of STP Pair load balance, SSP Connection balance and Link load balance may be displayed in any convenient manner, in conjunction with other measurements derived from data obtained by the probes 20. Thus, for example, the technique described in European patent application No. EP-A-0 598 484 may be used to enable a user readily to identify those parts of the network which have particularly high values of these parameters. An example of a set of spider diagrams generated in accordance with that technique is shown in Figure 3.

Referring to Figure 3, a Load Monitor diagram displays the maximum normalized value of each of eight parameters:

| | |
|---|---|
| STP B'lnce | the highest value of STP Pair Load balance derived as described above |
| SSP B'lnce | the highest value of SSP Connection balance derived as described above |
| Link B'lnce | the highest value of Link load balance derived as described above |
| STP Load | the number of messages processed by the STP with the maximum value of that parameter |
| SSP Load | the number of messages processed by the SSP with the maximum value of that parameter |
| A Link Load | the number of messages processed by the A Link (SSP to STP) with the maximum value of that parameter |
| C Link Load | the number of messages processed by the C Link with the maximum value of that parameter |
| D Link Load | the number of messages processed by the D Link with the maximum value of that parameter |

An SNM Monitor diagram displays the maximum normalized value of another eight parameters:

| | |
|---|---|
| LSSUs | Link Status Signalling Units |
| SLTs | Signalling Link Tests |
| A-SNMs | A Link Signalling Network Management messages |
| C-SNMs | C Link Signalling Network Management messages |

(continued)

| D-SNMs | D Link Signalling Network Management messages |
| --- | --- |
| Link cgt | Link congestion |
| STP cgt | STP congestion |
| Routing | Adjacent point codes contained in Route Set Test messages |

A Calls Monitor diagram displays the maximum normalized value of four parameters:

| qos | quality of service (ratio to failed calls to calls attempted) |
| --- | --- |
| c/attmp | call setup attempts |
| tx i/c rels | transmission of incomplete call releases |
| rx i/c rels | reception of incomplete call releases |

**Claims**

1. A method of monitoring a signalling network (10) having a plurality of signalling points (16) coupled by respective first signalling links (A) to a first signalling point (12) and by respective second signalling links (B) to a second signalling point (12), characterised by:

   monitoring (20) the number of messages transferred over each of said signalling links (18);
   deriving a measurement of the total number of messages processed by each of said first and second signalling points (12); and
   deriving a measurement of the total number of messages processed by at least one of said first and second signalling points (12) relative to the sum total of messages processed by said first and second signalling points (12).

2. The method of claim 1, including monitoring the size of messages transferred over each of said signalling links (18).

3. The method of claim 1 or claim 2, including the step of deriving said measurements for each of a plurality of first and second signalling points (12), and identifying the maximum value of said measurement of the total number of messages processed by at least one of said first and second signalling points (12) relative to the sum total of messages processed by said first and second signalling points (12).

4. The method of any one of the preceding claims, including the steps of:

   deriving a measurement of the total number of messages transferred by a signalling point (16) to each of said first and second signalling points (12) respectively; and
   deriving a measurement of the total number of messages transferred by a signalling point (16) to at least one of said first and second signalling points (12) relative to the sum total of messages transferred by that signalling point (16) to said first and second signalling points (12).

5. The method of claim 4, including the step of deriving said measurements of messages transferred by a signalling point (16) for each of a plurality of signalling points (16), and identifying the maximum value of said measurement of the total number of messages transferred by a signalling point (16) to at least one of said first and second signalling points (12) relative to the sum total of messages transferred by that signalling point (16) to said first and second signalling points (12).

6. The method of any one of the preceding claims, including the steps of:

   deriving a measurement of the total number of messages transferred over each link (18) of a link set (A,B) coupling a signalling point (16) to one of said first and second signalling points (12); and
   deriving a measurement of the total number of messages transferred over at least one link (18) of a link set coupling a signalling point (16) to one of said first and second signalling points (12) relative to the sum total of messages transferred over all links (18) of that link set.

7. The method of claim 6, including the step of deriving said measurements of the total number of messages transferred over links (18) of a link set (A,B) for each of a plurality of link sets, and identifying the maximum value of said measurement of the total number of messages transferred over at least one link (18) of a link set coupling a signalling point (16) to one of said first and second signalling points (12) relative to the sum total of messages transferred over all links (18) of that link set.

8. Apparatus for monitoring a signalling network (10) having a plurality of signalling points (16) coupled by respective first signalling links (A) to a first signalling point (12) and by respective second signalling links (B) to a second signalling point (12), characterised by:

means (20) for monitoring the number of messages transferred over each of said signalling links (18);
means for deriving a measurement of the total number of messages processed by each of said first and second signalling points (12); and
means for deriving a measurement of the total number of messages processed by at least one of said first and second signalling points (12) relative to the sum total of messages processed by said first and second signalling points (12).

**Patentansprüche**

1. Ein Verfahren zum Überwachen eines Signalisierungsnetzes (10), das eine Mehrzahl von Signalisierungspunkten (16) aufweist, die durch jeweilige erste Signalisierungsverbindungen (A) mit einem ersten Signalisierungspunkt (12) und durch jeweilige zweite Signalisierungsverbindungen (B) mit einem zweiten Signalisierungspunkt (12) gekoppelt sind, gekennzeichnet durch folgende Schritte:

Überwachen (20) der Zahl von Nachrichten, die über jede der Signalisierungsverbindungen (18) übertragen wird;

Ableiten einer Messung der Gesamtzahl von Nachrichten, die durch sowohl den ersten als auch den zweiten Signalisierungspunkt (12) verarbeitet wird; und

Ableiten einer Messung der Gesamtzahl von Nachrichten, die durch mindestens entweder den ersten oder den zweiten Signalisierungspunkt (12) verarbeitet wird, relativ zu der Gesamtsumme von Nachrichten, die durch den ersten und den zweiten Signalisierungspunkt (12) verarbeitet wird.

2. Das Verfahren gemäß Anspruch 1, das das Überwachen der Größe von Nachrichten, die über jede der Signalisierungsverbindungen (18) übertragen werden, aufweist.

3. Das Verfahren gemäß Anspruch 1 oder Anspruch 2, das den Schritt des Ableitens der Messungen für jeden einer Mehrzahl von ersten und zweiten Signalisierungspunkten (12) und des Identifizierens des maximalen Werts der Messung der Gesamtzahl von Nachrichten, die durch mindestens einen der ersten und zweiten Signalisierungspunkte (12) verarbeitet wird, relativ zu der Gesamtsumme von Nachrichten, die durch die ersten und die zweiten Signalisierungspunkte (12) verarbeitet wird, aufweist.

4. Das Verfahren gemäß einem der vorhergehenden Ansprüche, das folgende Schritte aufweist:

Ableiten einer Messung der Gesamtzahl von Nachrichten, die durch einen Signalisierungspunkt (16) zu jedem der ersten und zweiten Signalisierungspunkte (12) jeweils übertragen wird; und

Ableiten einer Messung der Gesamtzahl von Nachrichten, die durch einen Signalisierungspunkt (16) zu mindestens einem der ersten und zweiten Signalisierungspunkte (12) übertragen wird, relativ zu der Gesamtsumme von Nachrichten, die durch diesen Signalisierungspunkt (16) zu den ersten und zweiten Signalisierungspunkten (12) übertragen wird.

5. Das Verfahren gemäß Anspruch 4, das den Schritt des Ableitens der Messungen von Nachrichten, die durch einen Signalisierungspunkt (16) übertragen werden, für jeden einer Mehrzahl von Signalisierungspunkten (16) und des Identifizierens des maximalen Werts der Messung der Gesamtzahl von Nachrichten, die durch einen Signalisierungspunkt (16) zu mindestens einem der ersten und zweiten Signalisierungspunkte (12) übertragen wird, relativ zu der Gesamtsumme von Nachrichten, die durch diesen Signalisierungspunkt (16) zu den ersten und zweiten Signalisierungspunkten (12) übertragen wird, aufweist.

**6.** Das Verfahren gemäß einem der vorhergehenden Ansprüche, das folgende Schritte aufweist:

Ableiten einer Messung der Gesamtzahl von Nachrichten, die über jede Verbindung (18) eines Verbindungssatzes (A, B) übertragen wird, der einen Signalisierungspunkt (16) mit einem der ersten und zweiten Signalisierungspunkte (12) koppelt; und

Ableiten einer Messung der Gesamtzahl von Nachrichten, die über mindestens eine Verbindung (18) eines Verbindungssatzes, der einen Signalisierungspunkt (16) mit einem der ersten und zweiten Signalisierungspunkte (12) koppelt, übertragen wird, relativ zu der Gesamtsumme von Nachrichten, die über alle Verbindungen (18) dieses Verbindungssatzes übertragen wird.

**7.** Das Verfahren gemäß Anspruch 6, das den Schritt des Ableitens der Messungen der Gesamtzahl von Nachrichten, die über die Verbindungen (18) eines Verbindungssatzes (A, B) für jeden einer Mehrzahl von Verbindungssätzen übertragen wird, und des Identifizierens des maximalen Werts der Messung der Gesamtzahl von Nachrichten, die über mindestens eine Verbindung (18) eines Verbindungssatzes, der einen Signalisierungspunkt (16) mit einem der ersten und der zweiten Signalisierungspunkte (12) koppelt, übertragen wird, relativ zu der Gesamtsumme von Nachrichten, die über alle Verbindungen (18) dieses Verbindungssatzes übertragen wird, aufweist.

**8.** Vorrichtung zum Überwachen eines Signalisierungsnetzes (10), das eine Mehrzahl von Signalisierungspunkten (16) aufweist, die durch jeweilige erste Signalisierungsverbindungen (A) mit einem ersten Signalisierungspunkt (12) und durch jeweilige zweite Signalisierungsverbindungen (B) mit einem zweiten Signalisierungspunkt (12) gekoppelt sind, gekennzeichnet durch folgende Merkmale:

eine Einrichtung (20) zum Überwachen der Zahl von Nachrichten, die über jede der Signalisierungsverbindungen (18) übertragen wird;

eine Einrichtung zum Ableiten einer Messung der Gesamtzahl von Nachrichten, die durch sowohl den ersten als auch den zweiten Signalisierungspunkt (12) verarbeitet wird; und

eine Einrichtung zum Ableiten einer Messung der Gesamtzahl von Nachrichten, die durch mindestens entweder den ersten oder den zweiten Signalisierungspunkt (12) verarbeitet wird, relativ zu der Gesamtsumme von Nachrichten, die durch den ersten und den zweiten Signalisierungspunkt (12) verarbeitet wird.

**Revendications**

**1.** Un procédé de surveillance d'un réseau de signalisation (10) à plusieurs points de signalisation (16) couplés par des premières connexions respectives de signalisation (A) à un premier point de signalisation (12) et par des deuxièmes connexions respectives de signalisation (B) à un deuxième point de signalisation (12), caractérisé par les étapes consistant à :

♦ surveiller (20) le nombre de messages transférés sur chacune desdites connexions de signalisation (18) ;

♦ déduire une mesure du nombre total de messages traités par chacun desdits premier et deuxième points de signalisation (12) ; et

♦ déduire une mesure du rapport entre le nombre total de messages traités par au moins l'un desdits premier et deuxième points de signalisation (12) et la somme totale des messages traités par lesdits premier et deuxième points de signalisation (12).

**2.** Le procédé selon la revendication 1, qui inclut une surveillance de la dimension de messages transférés sur chacune desdites connexions de signalisation (18).

**3.** Le procédé selon la revendication 1 ou la revendication 2, qui inclut l'étape consistant à déduire lesdites mesures pour chaque point d'une pluralité de premiers et deuxièmes points de signalisation (12), et identifier la valeur maximale de ladite mesure du rapport entre le nombre total de messages traités par au moins l'un desdits premier et deuxième points de signalisation (12) et la somme totale de messages traités par ledit premier et ledit deuxième point de signalisation (12).

4. Le procédé selon l'une quelconque des revendications précédentes, qui inclut les étapes consistant à déduire une mesure du nombre total de messages transférés par un point de signalisation (16) vers chacun desdits premier et deuxième points de signalisation (12) respectivement ; et à déduire une mesure du rapport entre le nombre total de messages transférés par un point de signalisation (16) vers au moins l'un desdits premier et deuxième points de signalisation (12) et la somme totale de messages transférés par ce point de signalisation (16) vers lesdits premier et deuxième points de signalisation (12).

5. Le procédé selon la revendication 4, qui inclut l'étape consistant à déduire lesdites mesures de messages transférés par un point de signalisation (16) pour chaque point d'un pluralité de points de signalisation (16), et identifier la valeur maximale de ladite mesure du rapport entre le nombre total de messages transférés par un point de signalisation (16) vers au moins l'un desdits premier et deuxième points de signalisation (12) et la somme totale de messages transférés par ce point de signalisation (16) vers lesdits premier et deuxième points de signalisation (12).

6. Le procédé selon l'une quelconque des revendications précédentes, qui inclut les étapes consistant à déduire une mesure du nombre total de messages transférés sur chaque connexion (18) d'un ensemble (A, B) de connexions qui couplent un point de signalisation (16) à l'un desdits premier et deuxième points de signalisation (12) ; et à déduire une mesure du rapport entre le nombre total de messages transférés sur au moins l'une des connexions (18) d'un ensemble de connexions qui couplent un point de signalisation (16) à l'un desdits premier et deuxième points de signalisation (12) et la somme totale de messages transférés sur toutes les connexions (18) de cet ensemble de connexions.

7. Le procédé selon la revendication 6, qui inclut l'étape consistant à déduire lesdites mesures du nombre total de messages transférés sur des connexions (18) d'un ensemble(A, B) de connexions pour chaque ensemble d'une pluralité d'ensembles de connexions, et identifier la valeur maximale de la mesure du rapport entre le nombre total de messages transférés sur au moins l'une des connexions (18) d'un ensemble de connexions qui couplent un point de signalisation (16) à l'un desdits premier et deuxième points de signalisation (12) et la somme totale de messages transférés sur toutes les connexions (18) de cet ensemble de connexions.

8. Appareil de surveillance d'un réseau de signalisation (10) à plusieurs points de signalisation (16) couplés par des premières connexions respectives de signalisation (A) à un premier point de signalisation (12) et par des deuxièmes connexions respectives de signalisation (B) à un deuxième point de signalisation (12), caractérisé par :

   ♦ un moyen (20) de surveillance du nombre de messages transférés sur chacune des connexions de signalisation (18) ;

   ♦ un moyen de déduction d'une mesure du nombre total de messages traités par chacun des premier et deuxième points de signalisation (12) ; et

   ♦ un moyen de déduction d'une mesure du rapport entre le nombre total de messages traités par au moins l'un desdits premier et deuxième points de signalisation (12) et la somme totale des messages traités par lesdits premier et deuxième points de signalisation (12).

Fig.1

EP 0 621 734 B1

Fig.2

Calls Monitor

SNM Monitor

Load Monitor

Fig.3

EP 0 621 734 B1